# EUROPÄISCHE PATENTANMELDUNG

(11) **EP 4 054 026 A1**
(43) Veröffentlichungstag der Anmeldung: **07.09.2022**
(21) Anmeldenummer: 22401002.5
(22) Anmeldetag: 10.02.2022
(51) Int. Cl.: H01R 24/76, G08B 13/14, H01R 13/66, H01R 24/78, H02G 3/22

(54) **ELEKTRISCHES/ELEKTRONISCHES GERÄT UND VERFAHREN ZUM BETRIEB EINES SOLCHEN**

(30) Priorität: 03.03.2021 DE 102021105047; 27.01.2022 DE 102022101936
(71) Anmelder: Albrecht Jung GmbH & Co. KG, 58579 Schalksmühle (DE)
(72) Erfinder: Biniossek, Nik, 58099 Hagen (DE); Era, Eduard, 58513 Lüdenscheid (DE); Haugk, Christian, 58579 Schalksmühle (DE)

(57) **Zusammenfassung**

Zu dem Zweck, ein elektrisches/elektronisches Gerät 1 für die Gebäudeinstallationstechnik, zu schaffen, welches einen verbesserten Diebstahlschutz und/oder einen optimalen Personenschutz bei starker mechanischer Belastung bietet, wird ein elektrisches/elektronisches Gerät 1 mit einem, von einem Designrahmen 2 umgebenen Zentralstück 3 und einem an einem Tragring 10 festgelegten Sockelteil 11 vorgeschlagen, wobei am Sockelteil 11 eine Spannungsversorgungseinheit S festlegbar ist, die einerseits kontaktgebend mit dem Sockelteil 11 in Wirkverbindung kommt und die andererseits zum elektrischen Anschluss zumindest einer elektrischen Funktionsbaugruppe, vorgesehen ist, wobei die Spannungsversorgungseinheit S zum Anschluss der zumindest einen elektrischen Funktionsbaugruppe zumindest eine Anschlussbuchse aufweist, in welche Anschlussbuchse ein Steckverbinder 7 kontaktierend eingesetzt ist, wobei an das Zentralstück 3 eine elektrische/elektronische Funktionskomponenten aufweisende in das Zentralstück 3 einsatzbare Leiterplatte L angrenzt. Dabei weist das elektrische/elektronische Gerät 1 einen Sensor X zur Erfassung der Beschleunigung und/oder der Positionslage auf, wobei ein Signal bezüglich der erfassten Beschleunigung und/oder der Positionslage erzeugt wird, welches Signal an ein an das Gerät 1 angeschlossene Relais R zur Schaltung eines Stromkreises der Gebäudeinstallationstechnik und/oder an mobiles Endgerät Z, beispielsweise in Gestalt einer Warnung, geleitet wird.

## Beschreibung

Die Erfindung betrifft ein elektrisches/elektronisches Gerät für die Gebäudeinstallationstechnik, insbesondere eine Steckdose, mit einem, von einem Designrahmen umgebenen Zentralstück und einem an einem Tragring festgelegten Sockelteil, wobei am Sockelteil eine Spannungsversorgungseinheit festlegbar ist, die einerseits kontaktgebend mit dem Sockelteil in Wirkverbindung kommt und die andererseits zum elektrischen Anschluss zumindest einer elektrischen Funktionsbaugruppe vorgesehen ist, wobei die Spannungsversorgungseinheit zum Anschluss der zumindest einen elektrischen Funktionsbaugruppe zumindest eine Anschlussbuchse aufweist, in welche Anschlussbuchse ein Steckverbinder kontaktierend eingesetzt ist, wobei an das Zentralstück eine elektrische/elektronische Funktionskomponenten aufweisende in das Zentralstück einsatzbare Leiterplatte angrenzt. Die Erfindung betrifft ferner ein Verfahren zum schaltbaren Betrieb eines solchen elektrischen/elektronischen Gerätes für die Gebäudeinstallationstechnik.

Elektrische/elektronische Geräte, beispielsweise Steckdosen, Schalter oder Taster, sind regelmäßig an ein Energieversorgungssystem angeschlossen, meistens: an verschiedene Stromkreise in einem Gebäude.

Eine aus DE 10 2021 105 047 B3 bekannt gewordene Steckdose bietet, ohne Bauraumverlust bezüglich der Einbautiefe hinnehmen zu müssen, also: ohne das Design und die infrastrukturellen Anforderungen zu strapazieren, Platz für eine Vielzahl von unterschiedlichen Funktionsbaugruppen auf einer Leiterplatte, welche Funktionsbaugruppen die Steckdose zu einer smarten Steckdose machen, wobei der Montage- und Handlingaufwand sowie die Montagefehleranfälligkeit auf ein Minimum reduziert sind.

Problematisch bei solchermaßen elaborierten und in Zeiten der Halbleiterproblematik und der Inflation umso begehrteren Steckdosen ist, dass diese zunehmend Objekt der Begierde von unautorisierten Personen werden, die einen Diebstahl öffentlich zugänglicher oder aber auch privater (Außen-)Steckdosen anvisieren. Die Aufklärungsquote beziehungsweise Verhinderung derartiger Delikte ist nahezu null. Der Schaden für den Eigentümer beziehungsweise Betreiber der Steckdosen ist groß, da dieser aufwendigen Ersatz beschaffen muss.

Gleichzeitig besteht neben dem Diebstahlschutz ein Bedürfnis, dass auch der Personenschutz bei unbeabsichtigt starker mechanischer Belastung der elektrischen/elektronischen Geräte, insbesondere Steckdosen, beispielweise beim Herausziehen eines Steckers aus der Steckdose, wobei der Einsatz und Aufsatz der Steckdose aus der Installationsdose geraten und möglicherweise abisolierte Kabel zum Vorschein kommen, verbessert wird.

Ausgehend von diesem diskutierten Stand der Technik liegt der Erfindung die Aufgabe zugrunde, ein elektrisches/elektronisches Gerät, beispielsweise eine Steckdose zu schaffen, die einen verbesserten Diebstahlschutz und/oder einen optimalen Personenschutz bei unbeabsichtigt starker mechanischer Belastung bietet.

Gelöst wird diese Aufgabe durch ein elektrisches/elektronisches Gerät, welches einen Sensor zur Erfassung der Beschleunigung und/oder der Positionslage aufweist, wobei ein Signal bezüglich der erfassten Beschleunigung und/oder der Positionslage erzeugt wird, welches Signal an ein an das elektrische/elektronische Gerät angeschlossene Relais zur Schaltung eines Stromkreises der Gebäudeinstallationstechnik und/oder an ein mobiles Endgerät, beispielsweise in Gestalt einer Warnung, geleitet wird.

Der Kerngedanke der Erfindung besteht darin, dass das erfindungsgemäße elektrische/elektronische Gerät dazu in der Lage ist, die Beschleunigung und/oder Positionslage durch einen oder mehrere Sensoren zu erfassen. Eine solche Beschleunigung und/oder Positionslage kann beispielsweise als Anzeichen für eine ordnungsgemäße Betätigung, insbesondere das Einstecken eines Steckers in eine Steckdose, gewertet werden. Hierzu werden entsprechende Beschleunigungs- und/oder Positionslage-Muster hinterlegt und mit den erfassten Werten verglichen. Falls ein zulässiger Fall erkannt wird, kann ein Signal an ein an das elektrische/elektronische Gerät angeschlossenes Relais zur Schaltung eines Stromkreises der Gebäudeinstallationstechnik weitergeleitet werden, um beispielsweise die Spannungsversorgung eines bestimmten Stromkreises einzuschalten oder, beispielsweise nach Erkennen der Beendigung der Betätigung des elektrischen/elektronischen Gerätes oder einer unzulässigen mechanischen Belastung, die zu dem Lösen der Steckdose aus der Installationsdose gleichkommt, auszuschalten. Falls eine Demontageaktivität, beispielsweise ein Diebstahlversuch, durch den Sensor zur Erfassung der Beschleunigung und/oder der Positionslage erkannt wird, wird das Signal an ein mobiles Endgerät, beispielsweise in Gestalt einer Warnung, geleitet. Hierdurch kann der Diebstahl des elektrischen/elektronischen Gerätes möglicherweise verhindert oder aufgeklärt werden, da die Warnung insbesondere auch den Ort des elektrischen/elektronischen Gerätes umfassen kann.

Das erfindungsgemäße elektrische/elektronische Gerät für die Gebäudesystemtechnik weist ein von einem Designrahmen umgebenes Zentralstück und ein an einem Tragring festgelegtes Sockelteil auf, wobei am Sockelteil eine Spannungsversorgungseinheit festlegbar ist. Die Spannungsversorgungseinheit kommt dabei einerseits kontaktgebend mit dem Sockelteil in Wirkverbindung und ist andererseits zum elektrischen Anschluss zumindest einer elektrischen Funktionsbaugruppe vorgesehen. Bei einer solchen Funktionsbaugruppe kann es sich zum Beispiel um eine Beleuchtungseinrichtung oder einen oder mehrere USB-Anschlüsse, die flächenbündig mit dem Designrahmen liegend in die Zentralplatte integriert sind, handeln.

Zum Anschluss der zumindest einen elektrischen Funktionsbaugruppe weist die Spannungsversorgungseinheit zumindest eine Anschlussbuchse auf, in welche Anschlussbuchse ein Steckverbinder kontaktierend eingesetzt ist.

Zudem verfügt ein solches Gerät über eine an das Zentralstück angrenzende, eine elektrische/elektronische Funktionskomponenten aufweisende, in das Zentralstück einsatzbare Leiterplatte.

Bevorzugt ist der Sensor auf einer Leiterplatte, beispielsweise auf der in das Zentralstück einsatzbaren Leiterplatte oder auf einer anderen Leiterplatte, die beispielsweise im Sockelteil untergebracht ist, angeordnet.

Bei einer besonders bevorzugten erfindungsgemäßen Ausgestaltung, geht von der Leiterplatte ein zur Montage des elektrischen/elektronischen Gerätes abspreizbarer, aus der Ebene der Leiterplatte auslenkbarer, den Steckverbinder aufweisender Flexleiterplattenabschnitt ab.

Dieser Flexleiterplattenabschnitt ist mit einer Aufnahme eines sich in Richtung der Spannungsversorgungseinheit erstreckenden Aufnahmeabschnitts eines an die Leiterplatte angeschlossenen Gehäuseteils zum elektrischen Anschluss des Steckverbinders der Leiterplatte mit der der Anschlussbuchse der Spannungsversorgungseinheit gefügt. Besonders vorteilhaft bei dieser Ausgestaltung ist, dass der Sensor auf dem Flexleiterplattenabschnitt angeordnet ist, so dass der Flexleiterplattenabschnitt zusätzlichen Bauraum zur Verfügung stellt, ohne die Einbautiefe und den Montageaufwand zu beeinträchtigen. Insofern handelt es sich bei dieser Ausführungsform der Erfindung um eine besonders platzsparende und einfach herzustellende Ausführungsform.

In einer weiteren erfindungsgemäßen Ausführungsform ist das Relais in dem elektrischen/elektronischen Gerät, insbesondere in dem Sockelteil, angeordnet. Hierdurch kann auf einfache Art und Weise sichergestellt werden, dass das elektrische/elektronische Gerät nur dann spannungsführend ist, wenn dies erwünscht ist, insbesondere dann nicht, wenn beispielsweise starke mechanische Belastungen auf das elektrische/elektronische Gerät eingewirkt haben, die möglicherweise mit einer Freilegung abisolierten Kabelguts einhergeht.

Gemäß einer weiteren erfindungsgemäßen Ausführungsform ist das Relais in einem an das elektrische/elektronische Gerät angeschlossenen Aktor angeordnet. Hierdurch kann der Anwender beispielweise auf einfache Art und Weise und auf dem Wege der Nachrüstung die gewünschten Effekte erreichen.

In einer weiteren erfindungsgemäßen Ausführungsform ist das elektrische/elektronische Gerät an ein Relais im Reiheneinbaugerät in der Unterverteilung angeschlossen. Dieses erlaubt, dass im Falle der Detektion bestimmter Beschleunigungsmuster oder Positionslagen ganze Stromkreise, beispielsweise Steckdosenstromkreise innerhalb eines Raumes, abgeschaltet werden, ohne dass der Lichtstromkreis unterbrochen wird. Hierdurch wird auf vorteilhafte Weise erreicht, dass die betreffenden Personen geschützt werden, ohne dass diese im Dunkeln stehen und sich möglicherweise durch Unfälle verletzen.

Gemäß einer besonders bevorzugten Ausgestaltung der Erfindung ist das elektrische/elektronische Gerät an ein mobiles Endgerät zur Übermittlung der Schaltzustände des Relais sowie von erfassten Bewegungen bzw. Positionslagen angeschlossen. Hierdurch wird ermöglicht, dass die versuchte Demontage zum Diebstahl des elektrischen/elektronischen Gerätes als Warnung an einen entsprechenden Adressaten gemeldet wird, um rechtzeitig eingreifen zu können. Ebenfalls möglich wird hierdurch beispielsweise, dass Eltern benachrichtigt werden, wenn Kinder sich unerwünschter Weise an Steckdosen zu schaffen machen.

In einer Ausgestaltung der Erfindung ist der Sensor zur Erfassung der Positionslage ein Gyroskop. Dieses stellt eine bewährte Form der Realisierung der Positionslagenermittlung dar.

Gemäß einer weiteren Ausgestaltung der Erfindung ist der Sensor zur Erfassung der Beschleunigung ein Accelerometer-Sensor. Dieses stellt eine kostengünstige und präzise Form der Realisierung der Beschleunigungsermittlung dar. Unter Beschleunigung sind insbesondere auch Erschütterungen zu verstehen.

Gemäß einer weiteren, besonders kompakten und funktionalen Ausgestaltung der Erfindung ist der Sensor zur Erfassung der Beschleunigung und der Positionslage eine inertiale Messeinheit [im Englischen: *inertial measurement unit,* kurz *IMU*)]*.*

In einer weiteren Ausführungsform der Erfindung umfasst das erfindungsgemäße elektrische/elektronische Gerät einen Sender zur Übermittlung der erfassten Beschleunigung und/oder Positionslage, beispielsweise als Warnung deklariert, an ein Endgerät, insbesondere ein mobiles Endgerät. Hierdurch kann ein Eingreifen der für das elektrische/elektronische Gerät zuständigen Person besonders schnell realisiert werden.

Ferner betrifft die Erfindung ein Verfahren zum schaltbaren Betrieb eines solchen erfindungsgemäßen elektrischen/elektronischen Gerätes für die Gebäudeinstallationstechnik, wobei das Signal an ein an das elektrische/elektronische Gerät angeschlossene Relais zur Schaltung eines Stromkreises der Gebäudeinstallationstechnik geleitet wird, die folgenden Schritte umfasst:
- Erfassen der Beschleunigung und/oder Positionslage mittels des Sensors in Folge einer ersten Betätigung des elektrischen/elektronischen Gerätes,
- Auswerten durch eine Auswerteeinheit, ob die Betätigung ordnungsgemäß ist,
- Einschalten des Relais, so dass die Energieversorgung des elektrischen/elektronischen Gerätes oder des Stromkreises, an den das elektrische/elektronische Gerät angeschlossen ist, freigegeben wird, falls die erste Betätigung ordnungsgemäß ist, während andernfalls keine Freigabe erfolgt,
- Erfassen der Beschleunigung und/oder Positionslage mittels des Sensors in Folge einer zweiten Betätigung des elektrischen/elektronischen Gerätes,
- Ausschalten des Relais, so dass die Energieversorgung des elektrischen/elektronischen Gerätes oder des Stromkreises, an den das elektrische/elektronische Gerät angeschlossen ist, unterbrochen wird, falls die zweite Betätigung ordnungsgemäß ist.

Es versteht sich, dass erfindungsgemäß unter Betätigung des elektrischen/elektronischen Gerätes ein Betätigen eines Schalters, eines Tasters oder das Einstecken oder Herausziehen eines Steckers gemeint ist.

Durch ein solches erfindungsgemäßes Verfahren wird sichergestellt, dass ein regelmäßig spannungsloser Zustand nur für den Betrieb des erfindungsgemäßen elektrischen/elektronischen Gerätes aufrechterhalten wird.

Alternativ kann die Erfindung auch dazu genutzt werden, dass das elektrische/elektronische Gerät die grundsätzlich freigegebene Energieversorgung eines Verbrauchers, beispielsweise einer Lampe, erst ausschaltet, wenn eine nicht ordnungsgemäße Betätigung erfasst worden ist. Ein solches Verfahren bietet jedoch gegenüber der Variante, bei der die Energieversorgung nur während des Betriebs des elektrischen/elektronischen Gerätes eingeschaltet ist, ein nicht so hohes Maß an Sicherheit.

Die Auswertung, ob die ob die Betätigung ordnungsgemäß ist, kann beispielsweise in einer Auswerteeinheit erfolgen, in der bestimmte Muster von zulässigen Beschleunigungen und/oder Positionslagen abgelegt sind.

Nachfolgend ist die Erfindung unter Bezugnahme auf die beigefügten Figuren anhand diverser Ausführungsbeispiele beschrieben. Es zeigen:
- **Fig. 1:**: eine perspektivische Darstellung einer Ausgestaltung des erfindungsgemäßen elektrischen/elektronischen Gerätes,
- **Fig. 2:**: eine weitere perspektivische Darstellung einer Ausgestaltung des erfindungsgemäßen elektrischen/elektronischen Gerätes und
- **Fig. 3:**: eine schematische Darstellung des erfindungsgemäßen Absetzens einer Warnung an ein mobiles Endgerät.

In den verschiedenen Figuren sind gleiche Teile stets mit den gleichen Bezugszeichen versehen und werden daher in der Regel auch jeweils nur einmal benannt beziehungsweise erwähnt.

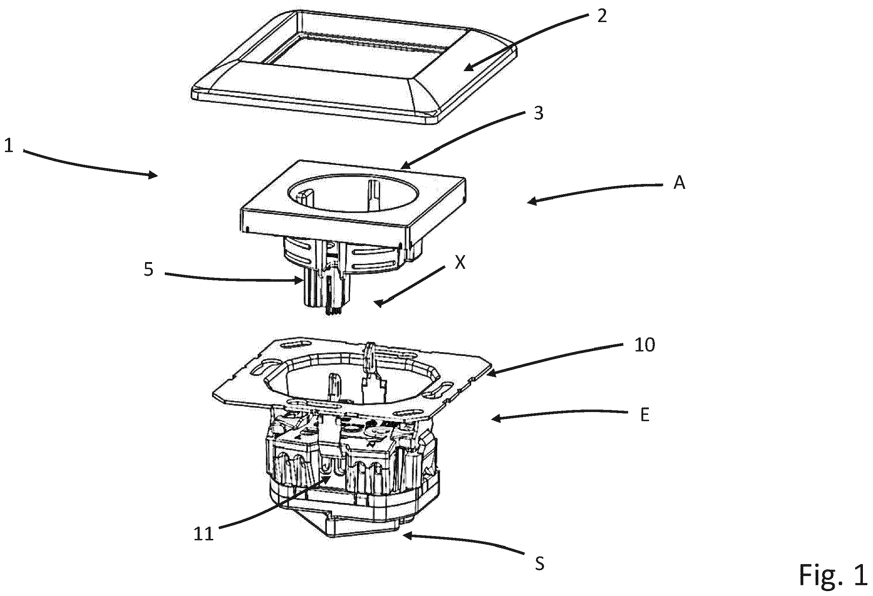

Das in Figur 1 perspektivisch dargestellte erfindungsgemäße elektrische/elektronische Gerät 1 umfasst neben einem Designrahmen 2 einen Aufsatz A und einen Einsatz E. Der Aufsatz A umfasst ein Zentralstück 3, eine mehrere elektrische/elektronische Funktionskomponenten (insbesondere ein Funkmodul und/oder eine LED und/oder eine Auswerteelektronik) aufweisende in das Zentralstück 3 einsatzbare Leiterplatte L, ein beispielsweise mittels Schnapprastung M an die zugehörige Ausnehmung 4 der Leiterplatte L angeschlossenes Gehäuseteil 5 und einen optionalen mechanischen Berührungsschutz 6, der zusätzlich vor unsachgemäßer Bedienung, beispielsweise durch Kinder, schützt.

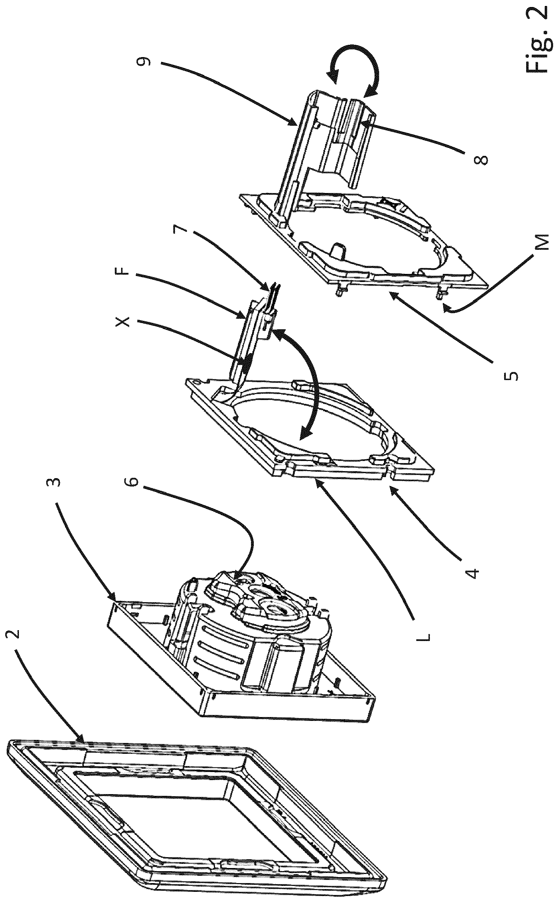

Dabei geht, wie Figur 2 zeigt, bevorzugt von der Leiterplatte L ein zur Montage des elektrischen/elektronischen Gerätes 1 abspreizbarer, aus der Ebene der Leiterplatte L auslenkbarer, einen Steckverbinder 7 aufweisenden Flexleiterplattenabschnitt F ab. Dieser Flexleiterplattenabschnitt F ist mit einer Aufnahme 8 eines sich in Richtung der Spannungsversorgungseinheit S erstreckenden Aufnahmeabschnitts 9 des an die Leiterplatte L angeschlossenen Gehäuseteils 5 gefügt. Der Einsatz E umfasst einen Tragring 10, ein Sockelteil 11 und eine Spannungsversorgungseinheit S. Dabei ist die Spannungsversorgungseinheit S dazu ausgelegt, an eine Spannungsversorgung einer Gebäudeinstallationstechnik angeschlossen zu werden und die bereitgestellte Spannung in eine benötigte Versorgungsspannung, beispielsweise 3,5V, zu konvertieren.

Wie in Figur 2 anhand einer besonders bevorzugten Ausführungsform zu erkennen ist, ist der Sensor X auf dem Flexleiterplattenabschnitt F angeordnet, was mit dem Vorteil einhergeht, dass der Sensor X, hier: eine inertiale Messeinheit zur Erfassung der Beschleunigung und der Positionslage, ohne Bauraumverlust auf der Leiterplatte L untergebracht werden kann, da das zur Verfügung stehende Einbauvolumen besonders effektiv ausgenutzt wird.

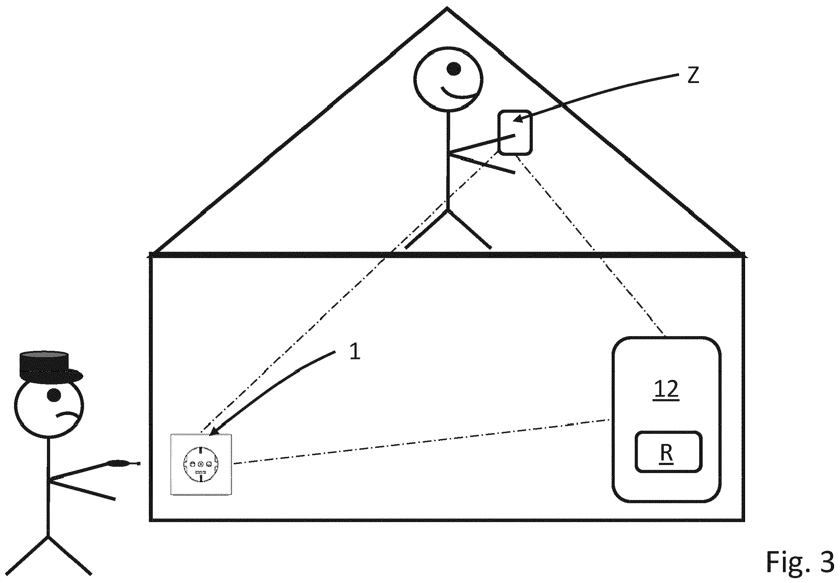

In Figur 3 ist schematisch gezeigt, wie ein versuchter Diebstahl eines erfindungsgemäßen elektrischen/elektronischen Gerätes 1 dank einer Warnung verhindert wird, die bei mit der Demontage einhergehende Änderung der Beschleunigung und/oder der Positionslage einhergeht und an das mobile Endgerät Z des Verantwortlichen des elektrischen/elektronischen Gerätes 1 abgesetzt wird. In analoger Weise kann eine solche Warnung bei der Detektion unzulässiger Beschleunigungs- und/oder Positionslagenwerte, beispielsweise, wenn Kinder sich an einer Steckdose zu schaffen machen, an ein oder mehrere Endgeräte der verantwortlichen, betreffenden Elternteile abgesetzt werden. Ebenfalls kann dann dank des Anschlusses des elektrischen/elektronischen Gerätes 1 an die Unterverteilung eine automatische Abschaltung des betreffenden Stromkreises erfolgen, so dass kein abisoliertes spannungsführendes Kabelgut sichtbar werden kann.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- 1: elektrisches/elektronisches Gerät
- 2: Designrahmen
- 3: Zentralstück
- 4: Ausnehmung
- 5: Gehäuseteil
- 6: Berührungsschutz
- 7: Steckverbinder
- 8: Aufnahme
- 9: Aufnahmeabschnitt
- 10: Tragring
- 11: Sockelteil
- 12: Unterverteilung

- A: Aufsatz
- E: Einsatz
- F: Flexleiterplattenabschnitt
- L: Leiterplatte
- M: Schnapprastung
- R: Relais
- S: Spannungsversorgungseinheit
- X: Sensor
- Z: mobiles Endgerät

## Patentansprüche

1. Elektrisches/elektronisches Gerät für die Gebäudeinstallationstechnik, insbesondere eine Steckdose, mit einem, von einem Designrahmen (2) umgebenen Zentralstück (3) und einem an einem Tragring (10) festgelegten Sockelteil (11), wobei am Sockelteil (11) eine Spannungsversorgungseinheit (S) festlegbar ist, die einerseits kontaktgebend mit dem Sockelteil (11) in Wirkverbindung kommt und die andererseits zum elektrischen Anschluss zumindest einer elektrischen Funktionsbaugruppe, vorgesehen ist, wobei die Spannungsversorgungseinheit (S) zum Anschluss der zumindest einen elektrischen Funktionsbaugruppe zumindest eine Anschlussbuchse aufweist, in welche Anschlussbuchse ein Steckverbinder (7) kontaktierend eingesetzt ist, wobei an das Zentralstück (3) eine elektrische/elektronische Funktionskomponenten aufweisende in das Zentralstück (3) einsatzbare Leiterplatte (L) angrenzt, **dadurch gekennzeichnet, dass** das elektrische/elektronische Gerät (1) einen Sensor (X) zur Erfassung der Beschleunigung und/oder der Positionslage aufweist, wobei ein Signal bezüglich der erfassten Beschleunigung und/oder der Positionslage erzeugt wird, welches Signal an ein an das elektrische/elektronische Gerät (1) angeschlossene Relais (R) zur Schaltung eines Stromkreises der Gebäudeinstallationstechnik und/oder an mobiles Endgerät (Z), beispielsweise in Gestalt einer Warnung, geleitet wird.

2. Elektrisches/elektronisches Gerät nach Anspruch 1, **dadurch gekennzeichnet, dass** der Sensor (X) auf einer Leiterplatte, beispielsweise auf der in das Zentralstück (3) einsatzbaren Leiterplatte (L) oder auf einer anderen Leiterplatte, die beispielsweise im Sockelteil (11) untergebracht ist, angeordnet ist.

3. Elektrisches/elektronisches Gerät nach Anspruch 1, **dadurch gekennzeichnet, dass** von der Leiterplatte (L) ein zur Montage des elektrischen/elektronischen Gerätes (1) abspreizbarer, aus der Ebene der Leiterplatte (L) auslenkbarer, den Steckverbinder (7) aufweisenden Flexleiterplattenabschnitt (F) abgeht, welcher Flexleiterplattenabschnitt (F) mit einer Aufnahme eines sich in Richtung der Spannungsversorgungseinheit (S) erstreckenden Aufnahmeabschnitts eines an die Leiterplatte (L) angeschlossenen Gehäuseteils zum elektrischen Anschluss des Steckverbinders (7) der Leiterplatte (L) mit der der Anschlussbuchse der Spannungsversorgungseinheit (S) gefügt ist, wobei der Sensor (X) auf dem Flexleiterplattenabschnitt (F) angeordnet ist.

4. Elektrisches/elektronisches Gerät nach einem der Ansprüche 1 bis 3, **dadurch gekennzeichnet, dass** das Relais (R) in dem elektrischen/elektronischen Gerät (1), insbesondere in dem Sockelteil (11), angeordnet ist.

5. Elektrisches/elektronisches Gerät nach einem der Ansprüche 1 bis 4, **dadurch gekennzeichnet, dass** das elektrische/elektronische Gerät (1) an einen Aktor angeschlossen ist, der das Relais (R) umfasst.

6. Elektrisches/elektronisches Gerät einem der Ansprüche 1 bis 5, **dadurch gekennzeichnet, dass** das elektrische/elektronische Gerät (1) an ein Relais (R) im Reiheneinbaugerät in der Unterverteilung (12) angeschlossen ist.

7. Elektrisches/elektronisches Gerät nach einem der Ansprüche 1 bis 6, **dadurch gekennzeichnet, dass** das elektrische/elektronische Gerät (1) an ein mobiles Endgerät (Z) zur Übermittlung der Schaltzustände des Relais (R) sowie von erfassten Bewegungen bzw. Positionslagen angeschlossen ist.

8. Elektrisches/elektronisches Gerät nach einem der Ansprüche 1 bis 7, **dadurch gekennzeichnet, dass** der Sensor (X) zur Erfassung der Positionslage ein Gyroskop ist.

9. Elektrisches/elektronisches Gerät nach einem der Ansprüche 1 bis 8, **dadurch gekennzeichnet, dass** der der Sensor (X) zur Erfassung der Beschleunigung ein Accelerometer-Sensor ist.

10. Elektrisches/elektronisches Gerät nach einem der Ansprüche 1 bis 9, **dadurch gekennzeichnet, dass** der Sensor (X) zur Erfassung der Beschleunigung und der Positionslage eine inertiale Messeinheit ist.

11. Elektrisches/elektronisches Gerät nach einem der Ansprüche 1 bis 10, **dadurch gekennzeichnet, dass** das elektrische/elektronische Gerät (1) einen Sender zur Übermittlung der erfassten Beschleunigung und/oder Positionslage an ein Endgerät, insbesondere ein mobiles Endgerät (Z), beispielsweise als Warnung deklariert, umfasst.

12. Verfahren zum schaltbaren Betrieb eines elektrischen/elektronischen Gerätes (1) für die Gebäudeinstallationstechnik nach einem der Ansprüche 1 bis 10, wobei das Signal an ein an das elektrische/elektronische Gerät (1) angeschlossene Relais (R) zur Schaltung eines Stromkreises der Gebäudeinstallationstechnik geleitet wird, umfassend die Schritte:
- Erfassen der Beschleunigung und/oder Positionslage mittels des Sensors (X) in Folge einer ersten Betätigung des elektrischen/elektronischen Gerätes (1),
- Auswerten durch eine Auswerteeinheit, ob die Betätigung ordnungsgemäß ist,
- Einschalten des Relais (R), so dass die Energieversorgung des elektrischen/elektronischen Gerätes (1) oder des Stromkreises, an den das elektrische/elektronische Gerät (1) angeschlossen ist, freigegeben wird, falls die erste Betätigung ordnungsgemäß ist, während andernfalls keine Freigabe erfolgt,
- Erfassen der Beschleunigung und/oder Positionslage mittels des Sensors (X) in Folge einer zweiten Betätigung des elektrischen/elektronischen Gerätes (1),
- Ausschalten des Relais (R), so dass die Energieversorgung des elektrischen/elektronischen Gerätes (1) oder des Stromkreises, an den das elektrische/elektronische Gerät (1) angeschlossen ist, unterbrochen wird, falls die zweite Betätigung ordnungsgemäß ist.
